# EUROPÄISCHE PATENTSCHRIFT

(11) **EP 2 410 224 B1**
(45) Veröffentlichungstag und Bekanntmachung des Hinweises auf die Patenterteilung: **14.05.2014**
(21) Anmeldenummer: 11174948.7
(22) Anmeldetag: 21.07.2011
(51) Int. Cl.: F16L 13/007, F16L 13/02, F16L 47/06, F16L 21/00, F16L 25/14

(54) **Rohranschlussstück, und Rohrverbindung**
Tube connection piece and tube connection
Pièce de raccordement de tuyaux et connexion de tuyaux

(30) Priorität: 21.07.2010 DE 202010008131 U; 27.04.2011 DE 202011000987 U
(43) Veröffentlichungstag der Anmeldung: 25.01.2012
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- FR-A1- 2 879 715
- FR-A1- 2 897 918
- GB-A- 1 152 756
- GB-A- 2 161 565

## Beschreibung

Die Erfindung betrifft ein Rohranschlussstück zur Verbindung zweier Rohre mit annähernd gleichem Nenndurchmesser, also Innendurchmesser.

Aus der FR 2 897 918 A1 oder der FR 2 879 715 A1 sind Rohranschlussstücke nach dem Oberbegriff des Anspruchs 1 bekannt. Ein solches Rohranschlussstück bildet das Ende einer isolierten, nämlich doppelwandigen Rohrleitung und schließt den Hohlraum zwischen den beiden Wandungen der Rohrleitung ab. Die Rohrleitung ist zum Führen kalter oder heißer Fluide unterhalb des Meerspiegels vorgesehen, insbesondere in großer Tiefe. Das Rohranschlussstück wird mit der Rohrleitung verschweißt. Dabei ist ein Versatz zwischen den beiden Schweißnähten vorgesehen. Aus diesem Grund erstreckt sich zur Rohrleitung der innenwandige Rohrabschnitt des Rohranschlussstücks weiter als der außenwandige, während Innen- und Auβenwand am anderen Ende des Rohranschlussstücks bündig miteinander abschließen. Vereinfacht sieht der Querschnitt einer doppelwandigen Rohrwandung des Rohranschlussstücks etwa H-förmig aus, wobei am ersten Ende die beiden Innen- und Außenwände von einem mittleren Verbindungssteg aus gleich lang sind, während sie zum anderen Ende hin unterschiedlich lang sind. Dementsprechend weist das Rohranschlussstück einen durchgehend gleichen Innendurchmesser aufweist, und zwei an den beiden Enden des Rohranschlussstücks unterschiedliche Außendurchmesser.

Auch aus der GB 2 161 565 A ist ein isolierte, doppelwandige Untersee-Rohrleitung bekannt, die am Ende ein angeschweißtes Rohranschlussstück aufweist. Vereinfacht sieht der Querschnitt der doppelwandigen Rohrwandung dieses Rohranschlussstücks etwa Y-förmig aus, wobei die Innenwand mit gleichbleibendem Durchmesser auch das Ende der Rohrleitung bildet, und wobei sich von diesem Ende aus das Rohranschlussstück gabelt und Innen- und Außenwandabschnitte bildet, die an die Innen- und Außenwände der doppelwandigen Rohrleitung anschließen.

Abgesehen von dem oben beschriebenen Spezialfall der Tiefsee-Rohrleitungen besteht in der Praxis häufig die Situation, dass bei der Erschließung eines Baugebiets oder in ähnlichen Anwendungsfällen an eine vorhandene Rohrleitung, die beispielsweise aus mineralischem Werkstoff besteht, eine neue Rohrleitung angeschlossen werden soll, welche beispielsweise aus Kunststoff besteht und daher bei gleichem Innen- bzw. Nenndurchmesser einen dementsprechend deutlich geringeren Außendurchmesser aufweist als die vorhandene, mineralische Rohrleitung. Bei gleichem Innendurchmesser der beiden Rohrleitungen ergibt sich also ein erheblicher Versatz außen an der Verbindungsstelle, der einerseits rein mechanisch nur schwierig überbrückt werden kann, beispielsweise unter Verwendung einer Mehrzahl von Ausgleichsringen, welche die Gefahr von Undichtigkeiten dieser herzustellenden Rohrverbindung begründen.

Aus der GB 1 152 756 A ist ein elastischer Ring bekannt, der auf das Ende der Kunststoff-Rohrleitung geschoben werden kann. Er erweitert den wirksamen Anschlussdurchmesser des Rohrendes, so dass je nach Ausgestaltung dieses Rings die Kunststoff-Rohrleitung in das Muffenende oder auf das Spitzende einer mineralischen Rohrleitung geschoben werden kann. Um einen fluiddichten Rohrübergang zu gewährleisten, muss dieser Ring perfekt an die Kunststoff-Rohrleitung angepasst sein, und die Dichtheit der Kontaktstelle darf nicht durch Sand oder dergleichen beeinträchtigt sein. Daher kann vorgesehen sein, den Ring mit der Kunststoff-Rohrleitung zu verschweißen bzw. zu verkleben. Abgesehen von dem damit verbundenen Arbeits- und Geräteaufwand ist es unter den an Baustellen herrschenden Bedingungen nicht unproblematisch, die Dichtheit der Schweiß- Klebverbindung zu gewährleisten.

Es sind zwar Rohrmanschetten aus der Praxis bekannt, welche zwei Rohrenden mit unterschiedlichen Außendurchmessern verbinden können, jedoch treten in der Praxis immer wieder Durchmesserunterschiede zwischen den Außendurchmessern der zu verbindenden Rohrleitungen auf, die zu groß sind, als dass sie mit derartigen Rohrmanschetten überwunden werden können.

Der Erfindung liegt die Aufgabe zugrunde, ein Rohranschlussstück anzugeben, welches die Verbindung zweier Rohre mit annähernd gleichem Innendurchmesser und stark unterschiedlichen Außendurchmessern auf einfache Weise ermöglicht. Weiterhin liegt der Erfindung die Aufgabe zugrunde, eine dementsprechend ausgestaltete Rohrverbindung anzugeben.

Diese Aufgabe wird durch ein Rohranschlussstück mit den Merkmalen des Anspruchs 1 und durch eine Rohrverbindung gemäß Anspruch 11 gelöst.

Die Erfindung schlägt mit anderen Worten vor, das Rohranschlussstück als eine Art Adapter auszugestalten, der über seine axiale Länge einen im wesentlichen gleichbleibenden Innendurchmesser aufweist, welcher nämlich dem Innendurchmesser der beiden zu verbindenden Rohrleitungen entspricht, so dass eine Stufe vermieden werden kann, an welcher sich ansonsten unerwünschte Ablagerungen bilden können. Außen weist das Rohranschlussstück an seinen beiden Enden unterschiedliche Außendurchmesser auf, die an die Außendurchmesser der beiden unterschiedlichen Rohrleitungsabschnitte angepasst sind, so dass sich dort jeweils ein reduzierter äußerer Versatz ergibt, der problemlos von handelsüblichen Rohrmanschetten umfasst und ausgeglichen werden kann. Der Anschluss an die beiden zu verbindenden Rohrleitungen erfolgt also unverändert mit den aus der Praxis bewährten und unter Baustellenbedingungen erprobten Mitteln, während die Herstellung des Rohranschlussstücks werkseitig erfolgen kann, also unter optimalen Bedingungen, welche die Dichtheit des Rohranschlussstücks sicherstellen und wo auch eine Dichtprüfung der hergestellten Rohranschlussstücke erfolgen kann. So kann schnell und mit zuverlässiger Dichtheit eine Rohrverbindung geschaffen werden, bei der beide Rohrleitungen zwar etwa den gleichen Nenndurchmesser, aber unterschiedliche Außendurchmesser aufweisen.

Bei dem vorschlagsgemäßen Rohranschlussstück ist vorgesehen, dass es über einen Teil seiner Länge doppelwandig ausgestaltet ist, so dass es nicht als spezielles Formstück hergestellt werden muss, sondern beispielsweise aus Rohrelementen eines handelsüblichen Lieferprogramms erstellt werden kann. Durch die Doppelwandigkeit wird zudem das Gewicht und die eingesetzte Materialmenge vorteilhaft verringert im Vergleich zu einer massiven Ausgestaltung insbesondere im Bereich der gröβeren Wandstärke. Gegebenenfalls kann der Zwischenraum zwischen Innen- und Außenrohr mit einem preisgünstigen und leichten Füllstoff ausgefüllt werden, beispielsweise ausgeschäumt werden, um die Stabilität des Rohranschlussstücks zu erhöhen und die Lage des Außenrohrs am Innenrohr zu fixieren. Das Innenrohr bestimmt die Gesamtlänge dieses Rohranschlussstücks und erstreckt sich von einem bis zum anderen Stirnende. Von einem dieser Stirnenden an ist über einen Teil der Länge des Innenrohrs ein Außenrohr vorgesehen, welches zwischen den beiden Stirnenden des Innenrohrs endet und dort durch einen Abschlussring konzentrisch zum Innenrohr gehalten wird. Dieser Abschlussring erstreckt sich vom Innenrohr bis zum Außenrohr.

Zudem ist vorgesehen, dass das Außenrohr durch ein Reduzierstück geschaffen wird, durch welches sich axial das Innenrohr erstreckt. Das Außenrohr ist dabei als eine äußere so genannte Glocke ausgestaltet, welche an ihren beiden axialen Enden die unterschiedlichen Durchmesser aufweist, wobei die Glocke sich mit ihrem kleineren Durchmesser parallel zum Innenrohr erstreckt und dem Innenrohr anliegt. Im Vergleich zu einer mehrteiligen Konstruktion wird durch die einteilige Ausgestaltung der Glocke die Dichtheit und die Formstabilität des Rohranschlussstücks verbessert.

Gegebenenfalls kann es vorteilhaft sein, dass der Zwischenraum zwischen Innen- und Außenrohr mit einem Füllstoff ausgefüllt ist, der im Vergleich zu dem Werkstoff der Innen- und Außenrohre preisgünstiger und eventuell auch leichter ist, um die Stabilität des Rohranschlussstücks zu erhöhen und die Lage des Außenrohrs am Innenrohr zu fixieren. Beispielsweise kann der Zwischenraum ausgeschäumt sein.

Vorteilhaft kann vorgesehen sein, dass das Außenrohr und der Abschlussring als ein gemeinsames Bauteil ausgestaltet sind. Dies kann in der Praxis beispielsweise zu einer besonders preisgünstigen Herstellung des Rohrabschlussstücks führen, indem nämlich eine handelsübliche so genannte Rohrkappe verwendet wird. Deren Deckel wird mit einer zentralen Bohrung versehen, welche das Innenrohr aufnimmt. Diese durchbohrte Endkappe bildet somit als ein einziges Bauteil das Außenrohr und den Abschlussring des vorschlagsgemäßen Rohranschlussstücks, so dass in besonders wirtschaftlicher Weise das Rohranschlussstück, welches ein Sonderbauteil darstellt, unter Verwendung handelsüblicher Standardbauteile erstellt werden kann, nämlich eines Stücks Rohrleitung und der erwähnten Rohrkappe. Durch die Wahl des entsprechenden Außendurchmessers der Rohrkappe kann eine annähernde Angleichung dieses Rohranschlussstücks an den Außendurchmesser einer beispielsweise mineralischen Rohrleitung erfolgen, so dass nur noch ein vergleichsweise geringer Durchmesserunterschied zu überbrücken ist, was durch die bereits erwähnten handelsüblichen Rohrleitungsmanschetten geleistet werden kann.

Vorteilhaft kann das Rohranschlussstück aus Kunststoff bestehen, so dass für den Anschluss einer mineralischen Rohrleitung an eine Kunststoff-Rohrleitung Systemkomponenten aus dem Lieferprogramm der Kunststoff-Rohrleitungen verwendet werden können und ein problemloser, dichter und systemgleicher Anschluss der Kunststoffrohrleitung an das vorschlagsgemäße Rohranschlussstück möglich ist. Die Verklebung des Abschlussrings mit dem lnnenrohr ermöglicht einen flüssigkeitsdichten Anschluss dieser beiden Bauteile aneinander. lm Rahmen des vorliegenden Vorschlags kann eine derartige Verklebung auch im Sinne einer Ultraschallverschweißung oder einer Kaltverschwei-βung ausgeführt sein.

Vorteilhaft kann das aus dem Außenrohr ragende Stirnende des lnnenrohrs, welches an eine Kunststoff-Rohrleitung angeschlossen werden soll, als Muffenende oder als Spitzende ausgestaltet sein, so dass auf diese Weise der problemlose systemgleiche Anschluss an die Kunststoff-Rohrleitung erfolgen kann. lnsbesondere kann das lnnenrohr des vorschlagsgemäßen Rohranschlussstücks aus einem Abschnitt eines Kunststoffrohrs gebildet sein kann, wobei der gleiche Typ von Kunststoffrohren die mit dem Rohranschlussstück zu verbindende Kunststoff-Rohrleitung bildet.

Die vorschlagsgemäße Rohrverbindung beruht dementsprechend auf der Verwendung eines vorschlagsgemäßen Rohrleitungsabschnittes, wobei an das freie Ende des lnnenrohrs die Rohrleitung mit geringem Außendurchmesser angeschlossen wird, beispielsweise die erwähnte Kunststoff-Rohrleitung, und wobei an das andere Ende des Rohranschlussstücks, wo dieses nämlich den größeren Außendurchmesser aufweist, die Rohrleitung mit dem größeren Außendurchmesser anschließt. Eine an sich bekannte Rohrmanschette überbrückt diese Trennstelle zwischen dem Rohranschlussstück und der Rohrleitung mit der größeren Wandstärke, also dem größeren Außendurchmesser. Eine zweite Rohrmanschette kann zwar vorgesehen sein, um die Trennstelle zwischen dem Rohranschlussstück und der Rohrleitung mit der kleineren Wandstärke zu überbrücken, vorzugsweise jedoch ist dort keine Rohrmanschette vorgesehen, sondern der bereits erläuterte systemgleiche Anschluss des Rohranschlussstücks an die aus Kunststoff bestehende Rohrleitung mit der kleineren Wandstärke.

Durch geeignete Wahl des Außenrohrs des vorschlagsgemäßen Rohranschlussstücks kann die Angleichung an den Außendurchmesser der dickwandigen Rohrleitung in der Weise erfolgen, dass die Rohrmanschette unmittelbar der dickwandigen Rohrleitung und unmittelbar dem Außenrohr des Rohranschlussstücks anliegt.

Wenn die Durchmesserunterschiede jedoch zu groß sind, kann vorgesehen sein, einen Zwischenring auf der dickwandigen Rohrmanschette anzuordnen, um auf diese Weise den Durchmesserunterschied zum Außenrohr des Rohranschlussstücks zu verringern. Auf diese Weise kann das Rohranschlussstück möglichst wirtschaftlich in vergleichsweise wenigen unterschiedlichen Varianten gefertigt werden, nämlich entsprechend den Durchmessern der vorteilhaft zu verwendenden Rohrkappen, so dass eine letztliche Feinanpassung durch die Verwendung des entsprechenden Zwischenrings auf der ersten, dickwandigen Rohrleitung erfolgen kann. lm Vergleich zu der Verwendung mehrerer Zwischenringe übereinander, also konzentrischer Zwischenringe, wird eine deutlich verbesserte Sicherheit erzielt, was die Dichtigkeit der Rohrverbindung angeht. Grundsätzlich kann jedoch vorgesehen sein, auf derartige Zwischenringe möglichst zu verzichten, beispielsweise wenn ein Rohr mit kreisrunder Außenkontur an das Rohranschlussstück angeschlossen werden soll, und in solchen Fällen ein Rohranschlussstück mit geeignetem Außendurchmesser zu verwenden.

Einen Zwischenring zu verwenden kann jedoch insbesondere vorteilhaft sein, um eine Anpassung an unterschiedliche Rohrkonturen zu ermöglichen: wenn ein so genanntes Fußrohr, also ein mineralisches Rohr mit einer untenseitigen Abflachung mit einem derartigen Zwischenring zu versehen, der eine an diese Rohrgeometrie angepasste Innenkontur aufweist, der jedoch eine kreisrunde Außenkontur aufweist, um auf diese Weise den zuverlässig dichten Anschluss einer Rohrmanschette zu ermöglichen. In diesem Fall dient der Zwischenring nicht zur Durchmesseranpassung, sondern vielmehr zur Konturanpassung und insbesondere dazu, die Sohlen der beiden zu verbindenden Rohrleitungen auf möglichst gleiche Höhe zu bringen, so dass bei der Durchströmung der Rohrverbindung ein Absatz in der Rohrsohle möglichst vermieden oder minimiert wird.

Vorteilhaft kann der gewünschte Durchmesserunterschied zwischen dem kleinen und dem größeren Rohr bei großen Durchmesserunterschieden durch eine mehrteilige Glocke überbrückt werden. Es werden dabei mehrere Glocken aneinander angeschlossen, die ansonsten jeweils für sich zur Überwindung eines einzigen Durchmesserunterschiedes vorgesehen sind, so dass durch eine entsprechende Aneinanderreihung von zwei oder mehreren Glocken ein entsprechend sehr viel größerer Durchmesserunterschied überbrückt werden kann. Auf diese Weise kann mit wenigen Formteilen eine große Vielfalt unterschiedlicher Reduzierstücke für die unterschiedlichen Anwendungsfälle geschaffen werden.

Vorteilhaft kann eine sichere Positionierung des Rohrabschnitts innerhalb der Glocke dadurch sichergestellt werden, dass wenigstens ein Stützelement in dem Zwischenraum zwischen dem ersten, innerhalb der Glocke befindlichen Anteil des Rohrabschnitts und der Glocke selbst vorgesehen ist. Dieses Stützelement kann beispielsweise als Ring ausgestaltet sein, der in diesen Zwischenraum eingesetzt wird, nachdem die Glocke und der Rohrabschnitt passend angeordnet sind. ln diesem Fall kann das Stützelement als separates Bauteil ausgestaltet sein.

Besonders vorteilhaft, weil herstellungstechnisch einfach zu verwirklichen, kann das Stützelement an die Glocke selbst angeformt sein, beispielsweise in Form von mehreren zirkumferent verteilten und axial verlaufenden Rippen, die bei der Endformung der Glocke aus einem Formwerkzeug kein Hindernis darstellen und die Handhabung sowie Herstellung separater Bauteile erübrigen.

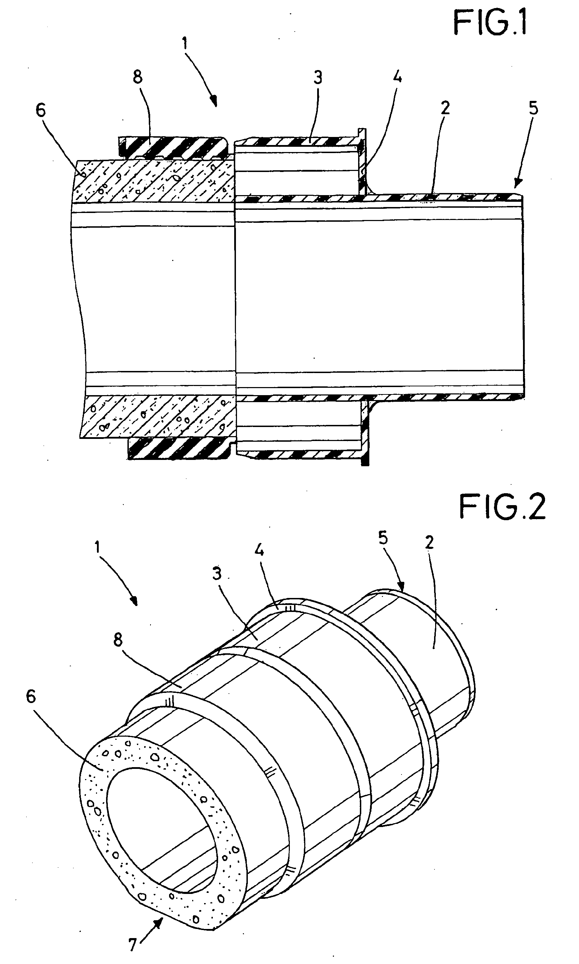

Ausführungsbeispiele der Erfindung werden anhand der rein schematischen Darstellungen nachfolgend näher erläutert. Dabei zeigt
- Fig. 1: einen Schnitt in axialer Richtung durch Teile einer Rohrverbindung,
- Fig. 2: eine perspektivische Ansicht auf die in Fig. 1 dargestellten Teile der Rohrverbindung,
- Fig. 3: einen Schnitt in axialer Richtung durch ein als Glocke ausgestaltetes Außenrohr eines erfindungsgemäßen Rohranschlussstücks, und
- Fig. 4: einen Schnitt in axialer Richtung durch das zweite Ausführungsbeispiel eines Rohranschlussstücks.

ln den Zeichnungen ist mit 1 jeweils ein Rohranschlussstück bezeichnet, welches ein lnnenrohr 2, ein Außenrohr 3 und einen Abschlussring 4 aufweist. Das Außenrohr 3 und der Abschlussring 4 sind einteilig ausgestaltet und aus einer so genannten Rohrkappe gefertigt. Durch Einbringen einer zentralen Bohrung in den Deckel der Rohrkappe wurde der ringförmige Abschlussring 4 geschaffen.

Das lnnenrohr 2 ist aus einem Abschnitt einer Kunststoff-Rohrleitung gefertigt, wobei das serienmäßig an der Rohrleitung vorgesehene Spitzende in der Zeichnung mit 5 bezeichnet ist. Auch das Außenrohr 3 weist eine stirnseitige Fase auf, ähnlich wie das Spitzende 5 des lnnenrohrs 2, weil eine derartige Fase serienmäßig an der Rohrkappe vorgesehen ist, aus welcher das Außenrohr 3 geschaffen wurde.

Der Abschlussring 4 ist mit dem lnnenrohr 2 verklebt, so dass hier ein flüssigkeitsdichter Anschluss geschaffen ist. Flüssigkeit, die in einen Spalt zwischen einer mineralischen Rohrleitung 6 und dem daran anschließenden Rohranschlussstück 1 gelangt, kann daher nicht aus dem Zwischenraum zwischen dem lnnenrohr 2 und dem Außenrohr 3 ins Freie gelangen.

Der lnnendurchmesser des lnnenrohrs 2 gleicht dem lnnendurchmesser der mineralischen Rohrleitung 6, die eine deutlich größere Wandstärke aufweist als das lnnenrohr 2. Die Rohrleitung 6 ist dabei als so genanntes Fußrohr ausgestaltet, weist also eine unterseitige Abflachung 7 auf. Aus diesem Grund ist ein Zwischenring 8 aus einem Elastomerwerkstoff vorgesehen, der eine ebenfalls mit einer Abflachung versehene lnnenkontur aufweist sowie eine kreisrunde Außenkontur. Somit weisen sowohl der Zwischenring 8 als auch das Außenrohr 3 des Rohranschlussstücks 1 kreisrunde und annähernd gleiche Außendurchmesser auf, so dass sie problemlos mit einer handelsüblichen Rohrmanschette miteinander verbunden werden können, die in den Zeichnungen nicht dargestellt ist.

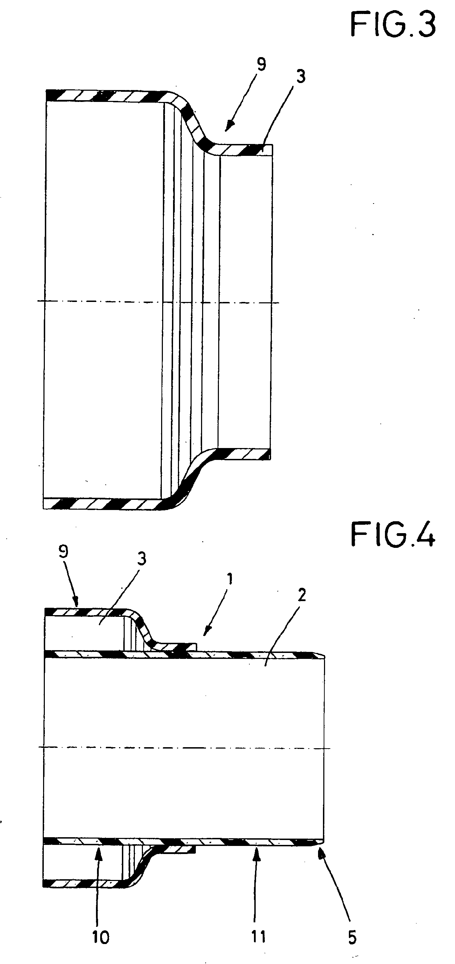

ln den Fig. 3 und 4 ist ein zweites Ausführungsbeispiel eines Rohranschlussstücks 1 dargestellt, bei welchem das Außenrohr 3 als Glocke 9 ausgestaltet ist, wobei das Rohranschlussstück 1 zudem als lnnenrohr 2 einen Rohrabschnitt aufweist, der sich axial durch die Glocke 9 erstreckt und einen ersten Anteil 10 aufweist, welcher sich innerhalb der Glocke 9 befindet, sowie einen zweiten Anteil 11, der über das kleinere Ende der Glocke 9 hinausragt.

Der erste Anteil 10 des lnnenrohrs 2 endet axial dort, wo auch das axial größere Ende der Glocke 9 vorgesehen ist, und der zweite Anteil 11 des lnnenrohrs 2 ist an seinem freien Ende als ein so genanntes Anschlussende ausgestaltet, nämlich als Spitzende 5, welches mit dem Muffenende eines Kanalrohrs in an sich bekannter Weise verbunden werden kann, wobei das Innenrohr 2 aus einem derartigen Kanalrohr hergestellt ist, indem ein entsprechender Anteil eines solchen Kanalrohrs abgetrennt worden ist und somit das lnnenrohr 2 bildet.

Die Glocke 9 ist mit dem lnnenrohr 2 fest und flüssigkeitsdicht verbunden, beispielsweise durch Verklebung, durch Ultraschallverschweißung o. dgl.

ln der Fig. 4 nicht dargestellt sind mehrere Stützelemente, die als axial verlaufende Rippen im lnneren der Glocke 9 vorgesehen sein können und welche die Kippbeweglichkeit des lnnenrohrs 2 innerhalb der Glocke 9 begrenzen. Die Stützelemente können sich insbesondere bis zum äußeren Umfang des lnnenrohrs 2 erstrecken, so dass dieser gegen Kippbewegungen innerhalb der Glocke 9 vollständig gesichert ist.

## Patentansprüche

1. Rohranschlussstück (1) zur Verbindung zweier Rohre mit annähernd gleichem Nenndurchmesser,
wobei das Rohranschlussstück (1) einen durchgehend gleichen Innendurchmesser aufweist,
und zwei an den beiden Enden des Rohranschlussstücks (1) unterschiedliche Außendurchmesser, wobei
der Innendurchmesser durch ein Innenrohr (2) bestimmt wird,
und ein Außenrohr (3) vorgesehen ist, welches sich über einen Teil der axialen Länge des Innenrohrs (2) außen und im Abstand zu dem Innenrohr erstreckt,
wobei das Außenrohr (3) ein Außenende aufweist, welches in der Ebene eines Stirnendes des Innenrohrs (2) liegt, sowie ein so genanntes Mittelende aufweist, welches in einer Ebene zwischen den beiden Stirnenden des Innenrohrs liegt,
**dadurch gekennzeichnet, dass** ein Abschlussring, sich vom Mittelende des Außenrohrs (3) bis an das Innenrohr (2) erstreckt und wobei das Außenrohr (3) als eine äußere Glocke (9) ausgestaltet ist, welche an ihren beiden axialen Enden die unterschiedlichen Durchmesser aufweist,
wobei die Glocke (9) sich mit ihrem kleineren Durchmesser parallel zum Innenrohr (2) erstreckt und dem Innenrohr (2) anliegt.

2. Rohranschlussstück nach Anspruch 1,
**dadurch gekennzeichnet,**
**dass** der Zwischenraum zwischen dem Innenrohr (2) und dem Außenrohr (3) mit einem Füllstoff ausgefüllt ist.

3. Rohranschlussstück nach Anspruch 1 oder 2,
**dadurch gekennzeichnet,**
**dass** das Außenrohr (3) und der Abschlussring (4) als ein gemeinsames Bauteil ausgestaltet sind.

4. Rohranschlussstück nach einem der vorhergehenden Ansprüche, **dadurch gekennzeichnet,**
**dass** es aus Kunststoff besteht und der Abschlussring (4) mit dem Innenrohr (2) verklebt ist.

5. Rohranschlussstück nach einem der vorhergehenden Ansprüche, **dadurch gekennzeichnet,**
**dass** das aus dem Außenrohr (3) ragende Stirnende des Innenrohrs (2) als Muffen- oder Spitzende (5) eines Rohrleitungsabschnitts ausgestaltet ist.

6. Rohranschlussstück nach einem der vorhergehenden Ansprüche, **dadurch gekennzeichnet,**
**dass** die äußere Glocke (9) eine mehrstufige Außenkontur aufweist und aus wenigstens zwei jeweils eine Stufe ausbildenden Reduzierringen gebildet ist.

7. Rohranschlussstück nach einem der vorhergehenden Ansprüche, **dadurch gekennzeichnet,**
**dass** in dem Raum zwischen dem Außenrohr (3) und dem Innenrohr (2) wenigstens ein Stützelement angeordnet ist.

8. Rohranschlussstück nach Anspruch 7,
**dadurch gekennzeichnet,**
**dass** das Stützelement von dem Innenrohr (2) bis an das Außenrohr (3) verläuft und das Innenrohr (2) sich spielfrei in dem Außenrohr (3) abstützt.

9. Rohranschlussstück nach Anspruch 7 oder 8,
**dadurch gekennzeichnet,**
**dass** das Stützelement an das Außenrohr (3) angeformt ist.

10. Rohranschlussstück nach einem der Ansprüche 7 bis 9,
**dadurch gekennzeichnet,**
**dass** das Stützelement als axial verlaufende Stützrippe ausgestaltet ist,
wobei zirkumferent um das Innenrohr (2) verteilt mehrere derartige Stützrippen vorgesehen sind.

11. Rohrverbindung zweier Rohre mit annähernd gleichem Nenndurchmesser,
unter Verwendung eines Rohranschlussstücks (1) nach einem der vorhergehenden Ansprüche, welches einen durchgehend gleichen Innendurchmesser aufweist, und zwei an den beiden Enden des Rohranschlussstücks (1) unterschiedliche Außendurchmesser,
wobei eine erste Rohrleitung (6) mit einer ersten Wandstärke dort an das Rohranschlussstück (1) anschließt, wo dieses den größeren Außendurchmesser aufweist,
wobei der Innendurchmesser dieser ersten Rohrleitung (6) dem Innendurchmesser des Rohranschlussstücks (1) gleicht,
und wobei eine Rohrmanschette den größeren Außendurchmesser des Rohranschlussstückes (1) sowie einen benachbarten Abschnitt der ersten Rohrleitung (6) übergreift,
und wobei an das andere Stirnende des Rohranschlussstücks (1), wo dieses den kleineren Außendurchmesser aufweist, eine zweite Rohrleitung mit einer zweiten Wandstärke anschließt, welche kleiner ist als die erste Wandstärke der ersten Rohrleitung (6).

12. Rohrverbindung nach Anspruch 11,
**dadurch gekennzeichnet,**
**dass** zwischen der ersten Rohrleitung (6) und der Rohrmanschette ein Zwischenring (8) angeordnet ist.

13. Rohrverbindung nach Anspruch 12,
**dadurch gekennzeichnet,**
**dass** der Zwischenring (8) eine kreisrunde Außenkontur und eine vom Kreisrund abweichende Innenkontur aufweist.

## Claims

1. Pipe-connection piece (1) for joining two pipes of approximately the same nominal diameter, where the pipe-connection piece (1) has the same inner diameter throughout and two different outer diameters at both ends of the pipe-connection piece (1), where the inner diameter is determined by an inner pipe (2), and an outer pipe (3) is provided, which extends over part of the axial length of the inner pipe (2) on the outside and at a distance from the inner pipe,
where the outer pipe (3) has an outer end which lies at the level of one end face of the inner pipe (2), as well as a so-called middle end which lies at a level between the two end faces of the inner pipe,
**characterised in that** an end ring extends from the middle end of the outer pipe (3) to the inner pipe (2) and where the outer pipe (3) is shaped as an outside bell (9) which has the different diameters at each of its axial ends, where the smaller diameter of the bell (9) extends parallel to the inner pipe (2) and lies against the inner pipe (2).

2. Pipe-connection piece in accordance with claim 1, **characterised in that** the intervening space between the inner pipe (2) and the outer pipe (3) is filled with a filler material.

3. Pipe-connection piece in accordance with claim 1 or claim 2, **characterised in that** the outer pipe (3) and the end ring (4) are formed as one single part.

4. Pipe-connection piece in accordance with any of the aforementioned claims,
**characterised in that** it is made of plastic, and the end ring (4) is bonded to the inner pipe (2).

5. Pipe-connection piece in accordance with any of the aforementioned claims,
**characterised in that** the end face of the inner pipe (2) projecting out of the outer pipe (3) is shaped as the muff or tapered end (5) of a section of pipe.

6. Pipe-connection piece in accordance with any of the aforementioned claims,
**characterised in that** the outside bell (9) has a multiple-stage outer contour and is formed of reducing sleeves, each of which forms one stage.

7. Pipe-connection piece in accordance with any of the aforementioned claims,
**characterised in that** at least one supporting element is arranged in the space between the outer pipe (3) and the inner pipe (2).

8. Pipe-connection piece in accordance with claim 7, **characterised in that** the supporting element extends from the inner pipe (2) to the outer pipe (3) and that the inner pipe (2) is supported free of clearance in the outer pipe (3).

9. Pipe-connection piece in accordance with claim 7 or claim 8, **characterised in that** the supporting element is formed onto the outer pipe (3).

10. Pipe-connection piece in accordance with any of the claims 7 to 9, **characterised in that** the supporting element is formed as an axially running supporting rib, where several such supporting ribs are provided at intervals around the circumference of the inner pipe (2).

11. Pipe connection of two pipes of approximately the same nominal diameter using a pipe-connection piece (1) in accordance with any of the aforementioned claims, which has the same inner diameter throughout, and two different outer diameters at both ends of the pipe-connection piece (1), where a first pipe (6) with a first wall-thickness connects with the pipe-connection piece (1) at the point where this has the greater outer diameter, where the inner diameter of this first pipe (6) equals the inner diameter of the pipe-connection piece (1),
and where a pipe collar overlaps the greater outer diameter of the pipe-connection piece (1) as well as an adjoining section of the first pipe (6), and where a second pipe with a second wall-thickness connects with the other end face of the pipe-connection piece (1) where it has the smaller diameter, where this second wall-thickness is smaller than the first wall-thickness of the first pipe (6).

12. Pipe-connection in accordance with claim 11, **characterised in that** an intermediate ring (8) is arranged between the first pipe (6) and the pipe collar.

13. Pipe-connection in accordance with claim 12, **characterised in that** the intermediate ring (8) has a circular outer contour and an inner contour which deviates from the circular.

## Revendications

1. Raccord (1) de tuyaux destiné à relier deux tuyaux présentant un diamètre nominal approximativement identique, sachant que le raccord (1) de tuyaux présente de bout en bout le même diamètre intérieur, et deux diamètres extérieurs différents aux deux extrémités du raccord (1) de tuyaux, sachant que le diamètre intérieur est défini par un tube intérieur (2), et qu'un tube extérieur (3) est prévu qui s'étend à l'extérieur sur une partie de la longueur axiale du tube intérieur (2) et qui s'étend à distance du tube intérieur,
sachant que le tube extérieur (3) présente une extrémité extérieure qui se trouve dans le plan d'une extrémité frontale du tube intérieur (2), ainsi qu'une extrémité dite médiane qui se trouve dans un plan entre les deux extrémités frontales du tube intérieur,
**caractérisé en ce qu'**une bague terminale s'étend de l'extrémité médiane du tube extérieur (3) jusqu'au tube intérieur (2) et sachant que le tube extérieur (3) est configuré comme une cloche (9) extérieure présentant les différents diamètres en ses deux extrémités axiales, sachant que la cloche (9) applique par son plus petit diamètre parallèlement au tube intérieur (2) et applique contre le tube intérieur (2).

2. Raccord de tuyaux selon la revendication 1, **caractérisé en ce que** l'espace intercalaire entre le tube intérieur (2) et le tube extérieur (3) est comblé avec un matériau de remplissage.

3. Raccord de tuyaux selon la revendication 1 ou 2, **caractérisé en ce que** le tube extérieur (3) et la bague terminale (4) sont configurés comme un composant conjoint.

4. Raccord de tuyaux selon l'une des revendications précédentes, **caractérisé en ce qu'**il est en matière plastique et que la bague terminale (4) est collée contre le tube intérieur (2).

5. Raccord de tuyaux selon l'une des revendications précédentes, **caractérisé en ce que** l'extrémité frontale du tube intérieur (2) faisant saillie hors du tube extérieur (3) est configurée comme extrémité de manchon ou extrémité pointue (5) d'un segment de tuyauterie.

6. Raccord de tuyaux selon l'une des revendications précédentes, **caractérisé en ce que** la cloche extérieure (9) présente un contour extérieur multi-étagé et est formée d'au moins deux bagues réductrices formant chacune un étage.

7. Raccord de tuyaux selon l'une des revendications précédentes, **caractérisé en ce que** dans l'espace compris entre le tube extérieur (3) et le tube intérieur (2) est agencé au moins un élément d'appui.

8. Raccord de tuyaux selon la revendication 7, **caractérisé en ce que** l'élément d'appui s'étend du tube intérieur (2) au tube extérieur (3) et que le tube intérieur (2) prend appui sans jeu dans le tube extérieur (3).

9. Raccord de tuyaux selon la revendication 7 ou 8, **caractérisé en ce que** l'élément d'appui est modelé contre le tube extérieur (3).

10. Raccord de tuyaux selon l'une des revendications 7 à 9, **caractérisé en ce que** l'élément d'appui est configuré en nervure d'appui présentant un tracé axial, sachant que plusieurs de ces nervures d'appui sont prévues réparties sur la circonférence du tube intérieur (2).

11. Jonction de deux tuyaux présentant un diamètre nominal approximativement identique, en utilisant un raccord de tuyaux (1) selon l'une des revendications précédentes, raccord qui présente un diamètre intérieur constant de bout en bout, et deux diamètres extérieurs différents aux deux extrémités du raccord (1) de tuyaux, sachant que la première tuyauterie (6) présentant une première épaisseur de paroi se raccorde à la partie du raccord (1) de tuyaux où ce dernier présente le plus grand diamètre extérieur, sachant que le diamètre intérieur de cette première tuyauterie (6) est identique au diamètre intérieur du raccord (1) de tuyaux,
et sachant qu'une manchette tubulaire chevauche le diamètre extérieur plus important du raccord (1) de tuyaux ainsi qu'un segment voisin de la première tuyauterie (6), et sachant qu'à l'autre extrémité frontale du raccord (1) de tuyaux, là où ce dernier présente le plus petit diamètre extérieur, une seconde tuyauterie présentant une seconde épaisseur de paroi vient se raccorder, épaisseur qui est inférieure à la première épaisseur de paroi de la première tuyauterie (6).

12. Jonction de tuyauterie selon la revendication 11, **caractérisée en ce qu'**une bague intermédiaire (8) est agencée entre la première tuyauterie (6) et la manchette de tuyau.

13. Jonction de tuyauterie selon la revendication 12, **caractérisée en ce que** la bague intermédiaire (8) présente un contour extérieur circulaire et un contour intérieur de forme déviant de la forme circonférentielle.
